# EUROPÄISCHE PATENTSCHRIFT

(11) **EP 4 276 553 B1**
(45) Veröffentlichungstag und Bekanntmachung des Hinweises auf die Patenterteilung: **15.10.2025**
(21) Anmeldenummer: 22172424.8
(22) Anmeldetag: 10.05.2022
(51) Int. Cl.: G05B 19/406, G05B 19/409, B25J 9/16

(54) **VERFAHREN ZUR DIAGNOSE EINES ANWENDERPROGRAMMS UND ENGINEERINGSTATION**
METHOD FOR DIAGNOSIS OF A USER PROGRAM AND ENGINEERING STATION
PROCÉDÉ DE DIAGNOSTIC D'UN PROGRAMME D'APPLICATION ET STATION D'INGÉNIERIE

(43) Veröffentlichungstag der Anmeldung: 15.11.2023
(73) Patentinhaber: Siemens Aktiengesellschaft, 80333 München (DE)
(72) Erfinder: Gäbel, Kai, 09117 Chemnitz (DE); Horn, Wolfgang, 09337 Hohenstein-Ernstthal (DE); Jarosz, Piotr, 09122 Chemnitz (DE); Scherf, Thomas, 09244 Lichtenau (DE); Schneider, Sven, 09123 Chemnitz (DE)
(74) Vertreter: Siemens Patent Attorneys

(56) Entgegenhaltungen:
- EP-A1- 3 367 192
- EP-A1- 3 819 730
- US-A1- 2017 193 137

## Beschreibung

Die Erfindung betrifft ein Verfahren zur Diagnose eines Anwenderprogramms für eine Steuerung von Bewegungs- und Positionieraufgaben einer Mehrzahl an Antrieben, welche zum Ausführen einer Bewegungsbahn einer Vorrichtung betrieben werden, wobei das Anwenderprogramm einzelne Bewegungsabschnitte der Vorrichtung durch Ausführen von Programmbefehlen auslöst, wobei in einem textbasierten Programmeditor die Programmbefehle als Codezeilen implementiert werden, wobei die Vorrichtung mit ihrer Bewegungsbahn als eine dreidimensionale Ansicht in einem ersten Ausgabeelement dargestellt wird.

Ebenso betrifft die Erfindung eine Engineering-Station zur Diagnose eines Anwenderprogramms für eine Steuerung von Bewegungs- und Positionieraufgaben einer Mehrzahl an Antrieben, welche zum Ausführen einer Bewegungsbahn einer Vorrichtung betrieben werden, umfassend einen textbasierten Programmeditor, ein erstes Ausgabeelement ausgestaltet die Vorrichtung und ihre Bewegungsbahn als eine dreidimensionale Ansicht darzustellen, wobei das Anwenderprogramm Codezeilen mit Programmbefehlen aufweist, wobei die Programmbefehle ausgestaltet sind über eine Automatisierungskomponente Bewegungsabschnitte der Vorrichtung auszulösen.

Bei der Programmierung von beispielsweise Bewegungsfunktionalitäten (z.B. eine Roboterprogrammierung oder eine CNC-Programmierung) wird eine Bewegungsbahn oder auch eine Trajektorie durch Bewegungsbefehle in einer geeigneten Programmiersprache für eine Steuerung vorgegeben. Dabei erfolgt eine Programmierung der Bewegung wahlweise mit einer absoluten oder relativen Positionsangabe. Die Positionsangaben können darüber hinaus Bezug auf unterschiedliche Koordinatensysteme haben. Diese Vielfalt bedingt die Notwendigkeit einer manuellen Inbetriebnahme des betreffenden Programms für die Bewegungsbefehle, um die gewünschte Funktionalität letztendlich in der Maschine sicherstellen zu können.

Die EP 3 367 192 A1 beschreibt eine Implementierung, welche darauf abzielt, Fertigungsdaten und -ereignisse über Echtzeit- und Nicht-Echtzeitschnittstellen zu empfangen und die Daten miteinander zu verknüpfen.

Die Aufgabe der vorliegenden Erfindung ist es, eine Inbetriebnahme für eine Vorrichtung, insbesondere für Roboter oder für Werkzeugmaschinen, für einen Inbetriebsetzer zu erleichtern.

Die Aufgabe wird durch das eingangs genannte Verfahren dadurch gelöst, dass das Anwenderprogramm ausgeführt wird und dabei zeitdiskret zu Abtastzeitpunkten zum einen ein Positionsvektor der Bewegungsbahn und zum anderen ein Codzeilen-Index der zu diesem Abtastzeitpunkt ausgeführten Codezeile aufgezeichnet werden, wobei in einer ersten Zuordnungstabelle zu den jeweilgen Abtastzeitpunkten der Positionsvektor und der Codezeilen-Index als Wertepaar eingetragen werden, wobei zur Darstellung der Bewegungsbahn ein Grafikelement in Form eines Polygonzugs für die Bewegungsabschnitte erzeugt wird, dabei wird das Grafikelement mit der Zuordnungstabelle verknüpft und der Polygonzug wird zur Darstellung der Bewegungsbahn in das erste Ausgabeelement eingeblendet, das Grafikelement wird dabei sensitiv betrieben, so dass ein Benutzer mit einem Zeigegerät eine Stelle auf den Polygonzug auswählt und ein Ausgabefeld mit einer Codezeile angezeigt bekommt, wobei die angezeigte Codezeile den Programmbefehl aufweist, welcher durch die Ausführung für das Erreichen der ausgewählten Stelle innerhalb des Bewegungsabschnittes der Vorrichtung bzw. des Positionsvektor verantwortlich ist.

Anwenderprogramme dienen der Einrichtung und Programmierung eines Steuercontrollers für Motoren oder Achsen oder der Einrichtung und Programmierung einer Automatisierungskomponente, wobei bei einer Inbetriebnahme der Vorrichtung bzw. eines Positioniersystems die Ermittlung der für den jeweiligen Anwendungsfall optimalen Parameter wichtig ist. Derartige Programme zum Einrichten von Anwenderprogrammen auf Steuerungscontrollern haben in der Regel eine grafische Oberfläche und sind intuitiv zu bedienen. Insbesondere für Experten besteht zusätzlich ein mächtiger textbasierter Programmeingabeeditor zur Verfügung. Weil man in diesen mächtigen textbasierten Eingabeeditor über die Programmzeilen rasch den Überblick verliert, ist es von Vorteil, das beispielsweise ein Inbetriebsetzer durch draufzeigen mit einer Maus auf eine Leuchtspur bzw. auf die dargestellte Bewegungsbahn, ein Hinweis dazu bekommt welche Programmzeile bzw. welcher Programmbefehl für das Erreichen dieser Stelle auf die der Inbetriebsetzer gerade daraufzeigt, verantwortlich ist.

Auch ist es von Vorteil, wenn als Positionsvektor ein Werkzeugarbeitspunkt der Vorrichtung mit einer x-Koordinate und einer y-Koordinate für eine zweidimensionale Kinematik oder einer x-Koordinate, einer y-Koordinate und einer z-Koordinate für eine dreidimensionale Kinematik verwendet wird. Ein Werkzeugarbeitspunkt ist der Punkt, auf den sämtliche Positionieraufgaben der Vorrichtung definiert werden können.

Zur weiteren Erleichterung der Inbetriebsetzung wird zusätzlich ein Weg-Zeit-Diagramm der Vorrichtung in einem zweiten Ausgabeelement dargestellt, das Weg-Zeit-Diagramm wird dabei sensitiv betrieben, so dass ein Benutzer mit einem Zeigegerät einen Zeitpunkt auswählt und ein weiteres Ausgabefeld mit einer Codezeile angezeigt bekommt, wobei die angezeigte Codezeile den Programmbefehl aufweist, welcher durch die Ausführung zu diesen Zeitpunkt verantwortlich ist. Für die zeitliche Darstellung in dem Weg-Zeit-Diagramm wird zusätzlich ein Signal wie z.B. eine Beschleunigung, eine Geschwindigkeit oder eine Gelenkachse aufgezeichnet.

Erfindungsgemäß erfolgt weiter eine Verbindung von Programmierung, 3D-Darstellung und Weg-Zeit-Diagramm zu einer gemeinsamen Sicht. In der 3D-Darstellung wird ein Modell der Vorrichtung, in dem Fall eine Kinematik eines Roboters oder einer Werkzeugmaschine oder insbesondere ein Deltapicker, sowie eine Bewegungsbahn oder Trajektorie der Bewegung in Form einer Leuchtspur, die sich aus den Bewegungsprogrammen bzw. Anwenderprogrammen ergibt, visualisiert.

Einzelne Inbetriebnahmeschritte können weiter verbessert werden, wenn der Programmeditor in einen Schrittbetrieb auf Basis der Aufzeichnungen in der Zuordnungstabelle betrieben wird und ein einzelner Programmbefehl durch eine Handeingabe ausgeführt wird und der zu diesen Programmbefehlen zugehörige Bewegungsabschnitt wird in den Polygonzug optisch hervorgehoben.

Steht nicht der zeitliche Verlauf der Bewegung im Fokus, sondern die Abfolge des Programmablaufs, können in dieser Art von Schrittbetrieb die Einzelbefehle gesteuert werden und per Programmdarstellung die resultierende Bewegungsschritte in der 3D-Ansicht und/oder im Weg-Zeit-Diagramm dargestellt werden.

Eine weitere vorteilhafte Ausgestaltung des Verfahrens ist es, wenn der Programmeditor und das erste Ausgabeelement für die dreidimensionale Ansicht derart miteinander Wechselwirken, dass durch eine Auswahl einer Stelle auf den Polygonzug durch den Benutzer mit einem Zeigegerät der Programmeditor in den Fokus geschaltet wird und die Codezeile optisch hervorgehoben wird, welche dem Bewegungsabschnitt der ausgewählten Stelle entspricht, wobei der entsprechende Programmbefehl in der optisch hervorgehobenen Codezeile nochmal anders optisch hervorgehoben wird.

Für eine Vorabinbetriebnahme ist es vorteilhaft, wenn eine Simulation des Anwenderprogramms auf Basis der Aufzeichnung in der Zuordnungstabelle durchgeführt wird und ein Anwender die Bewegungsbahn mit der dreidimensionalen Ansicht in dem ersten Ausgabeelement testet ohne, dass eine real existierende Hardware vorhanden ist. Mit einer derartigen Funktionalität, welche beispielsweise in einen Engineeringsystem integriert wäre, könnte ein Anwender jetzt mit einer virtuellen Testgebung - ohne angeschlossene Hardware - seine Anwendersoftware simulieren und ausprobieren. So kann der Anwender bereits frühzeitig in einer der ersten Entwicklungsphasen für den Betrieb der Vorrichtung Programmteile optimieren.

Die eingangs genannte Aufgabe wird ebenfalls durch die eingangs genannte Engineering-Station dadurch gelöst, dass ein Ausführungsmittel vorhanden ist, welches ausgestaltet ist das Anwenderprogramm auszuführen und dabei zeitdiskret zu Abtastzeitpunkten zum einen ein Positionsvektor der Bewegungsbahn und zum anderen einen Codezeilen-Index der zu diesem Abtastzeitpunkt ausgeführten Codezeile in einer Zuordnungstabelle als Wertepaar aufzuzeichnen, das erste Ausgabeelement ist weiterhin ausgestaltet, die Bewegungsbahn als ein Grafikelement in Form eines Polygonzugs für die Bewegungsabschnitte dazustellen, dabei ist das Grafikelement derart sensitiv ausgestaltet, das ein Benutzer mit einen Zeigegerät eine Stelle auf den Polygonzug auswählt und ein Ausgabefeld mit einer Codezeile anzeigt, das Grafikelement verfügt über eine Verbindung zu der Zuordnungstabelle und ist weiterhin dazu ausgestaltet, diejenige Codezeile anzuzeigen, welche den Programmbefehl aufweist, welcher für das Erreichen der Vorrichtung des der ausgewählten Stelle zugehörigen Bewegungsabschnittes verantwortlich ist.

Weiterhin ist es vorteilhaft, wenn die Zuordnungstabelle als Positionsvektor ein Werkzeugarbeitspunkt der Vorrichtung mit einer x-Koordinate, einer y-Koordinate und einer z-Koordinate aufweist.

In einer weiterführenden Ausgestaltung der Engineering-Station weist diese ein zweites Ausgabeelement zur Darstellung eines Weg-Zeit-Diagramms der Vorrichtung auf, dass Weg-Zeit-Diagramm ist ausgestaltet, für einen sensitiven Betrieb, so dass ein Benutzer mit einem Zeigegerät einen Zeitpunkt auswählt und ein weiteres Ausgabefeld mit einer Codezeile angezeigt bekommt, wobei die angezeigte Codezeile den Programmbefehl aufzeigt, welcher zum ausgewählten Zeitpunkt ausgeführt wird, dabei hat das Weg-Zeit-Diagramm als weiteres Grafikelement eine weitere Verbindung zu der Zuordnungstabelle.

Insbesondere für eine Fehlersuche ist das Ausführungsmittel und der Programmeditor der Engineeringstation dazu ausgestaltet, in einen Schrittbetrieb durch eine Handeingabe einzelne Programmbefehle Schritt für Schritt auszuführen, wobei das Grafikelement ausgestaltet ist, zu dem jeweiligen Schritt den zugehörigen Bewegungsabschnitt in den Polygonzug optisch hervorzuheben.

In einer weiteren Ausgestaltung ist der Programmeditor und das erste Ausgabeelement für die dreidimensionale Ansicht derart ausgestaltet, dass durch eine Auswahl einer Stelle auf dem Polygonzug durch den Benutzer mit einem Zeigegerät, der Programmeditor in den Fokus geschaltet wird und die Codezeile, welche den Bewegungsabschnitt der ausgewählten Stelle entspricht, in dem Programmeditor optisch hervorgehoben wird, weiterhin ist der Programmeditor ausgestaltet, den entsprechenden Programmbefehl in der optisch hervorgehobenen Codezeile nochmals anders optisch hervorzuheben.

Eine weitere Ausgestaltung der Engineering-Station sieht ein Simulationsmittel vor, welches ausgestaltet ist, eine Simulation des Anwenderprogramms durchzuführen, wobei das erste Ausgabeelement ausgestaltet ist, einem Anwender mit der dreidimensionalen Ansicht es zu ermöglichen die Bewegungsbahn zu testen, ohne, dass eine real existierende Hardware vorhanden ist. Die simulierte Bewegung bzw. die simulierte Bewegungsbahn wird dann ebenfalls in der dreidimensionalen Ansicht als Leuchtspur dargestellt. Die daraus gewonnene Aufzeichnung lässt sich auch speichern und kann bei Bedarf Offline erneut abgespielt werden.

Die Zeichnung zeigt ein Ausführungsbeispiel der Erfindung. Dabei zeigt die
- FIG 1: eine Engineering-Station zur Steuerung und Diagnose einer Vorrichtung,
- FIG 2: eine Zuordnungstabelle von Zeitpunkt zu Programmzeile,
- FIG 3: eine Monitoransicht von Programmeditor und Ausgabefeldern und
- FIG 4: eine Bewegungsbahn oder Trajektorie mit einzelnen Bewegungsabschnitten.

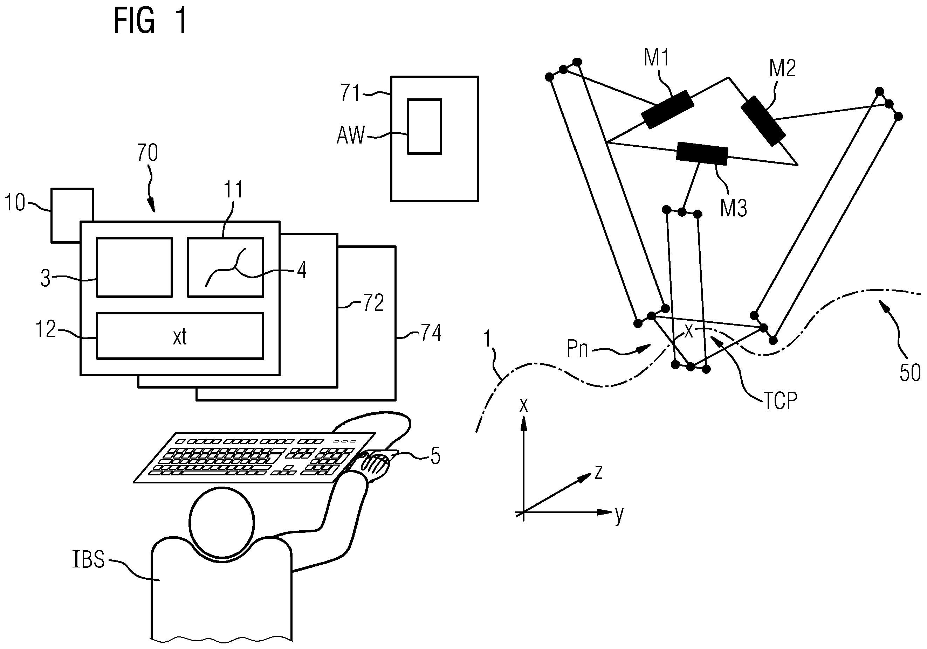

Gemäß FIG 1 ist eine Engineering-Station 70 zur Diagnose eines Anwenderprogramms AW für eine Steuerung von Bewegungs- und Positionieraufgaben eines ersten Antriebs M1, eines zweiten Antriebs M2 und eines dritten Antriebs M3 dargestellt. Die Antriebe M1,M2,M3 sind Teil einer Vorrichtung 50, welche beispielsweise als ein Deltapicker ausgestaltet ist, die Vorrichtung 50 weist einen Werkzeugarbeitspunkt TCP auf, welcher in diesem Fall gleichzusetzen ist mit einen Positionsvektor Pn. Der Werkzeugarbeitspunkt TCP wird mittels des Anwenderprogramms AW auf einer Bewegungsbahn 1 geführt. In einer Automatisierungskomponente 71 läuft später im realen Betrieb das Anwenderprogramm AW ab. Die Automatisierungskomponente 71 ist dazu ausgestaltet, über entsprechende Ausgangsbausteine die Antriebe M1,M2,M3 entsprechend der Programmbefehle Bi anzusteuern.

Zum Ausführen der Bewegungsbahn 1 der Vorrichtung 50 umfasst das Anwenderprogramm AW Codezeilen CZk mit Programmbefehlen Bi, welche wiederum das Ansteuern der Antriebe M1,M2,M3 auslösen. Die Engineering-Station 70 umfasst einen textbasierten Programmeditor 3 und ein erstes Ausgabeelement 11, wobei das erste Ausgabeelement 11 ausgestaltet ist, die Vorrichtung 50 und ihre Bewegungsbahn 1 als eine dreidimensionale Ansicht 3D darzustellen, dazu weist das Anwenderprogramm AW Codezeilen CZk mit Programmbefehlen Bi auf, wobei die Programmbefehle Bi ausgestaltet sind, über die Automatisierungskomponente 71 Bewegungsabschnitte 2 der Vorrichtung 50 auszulösen.

Ein Ausführungsmittel 72 ist dazu ausgestaltet, das Anwenderprogramm AW auszuführen und dabei zeitdiskret zu Abtastzeitpunkten nT zum einen einen Positionsvektor Pn der Bewegungsbahn 1 und zum anderen einen Codezeilen-Index In der zu diesem Abtastzeitpunkt nT ausgeführten Codezeile CZK in einer Zuordnungstabelle 10 als Wertepaar aufzuzeichnen.

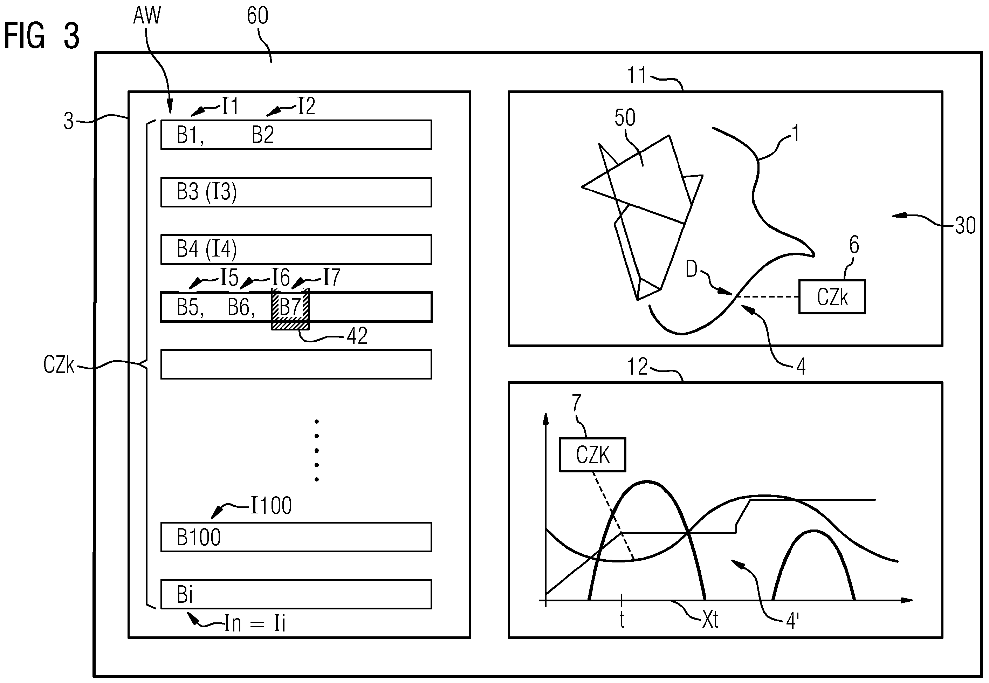

Als besonders vorteilhaft wird hier angesehen, dass das erste Ausgabeelement 11 weiterhin ausgestaltet ist, die Bewegungsbahn 1 als Grafikelement 4 in Form eines Polygonzugs für die Bewegungsabschnitte 2 darzustellen, dabei ist das Grafikelement 4 derart sensitiv ausgestaltet, dass ein Benutzer IBS mit einen Zeigegerät 5 eine Stelle D auf den Polygonzug auswählt und ein Ausgabefeld 6 mit einer Codezeile CZk anzeigt, das Grafikelement 4 verfügt über eine Verbindung zu der Zuordnungstabelle 10 und ist weiterhin dazu ausgestaltet diejenige Codezeile CZk anzuzeigen, welche den Programmbefehl Bi aufweist, welcher für das Erreichen der Vorrichtung 50 des der ausgewählten Stelle D zugehörigen Bewegungsabschnittes 2 verantwortlich ist (siehe hierzu auch FIG 3). Die Zuordnungstabelle 10 arbeitet mit dem Positionsvektor Pn, welcher auch den Werkzeugarbeitspunkt TCP der Vorrichtung 50 darstellt, hierzu wird eine x-Koordinate x, eine y-Koordinate y und eine z-Koordinate z verwendet.

Die Engineering-Station 70 weist weiterhin ein zweites Ausgabeelement 12 zur Darstellung eines Weg-Zeit-Diagramms Xt der Vorrichtung 50 auf, das Weg-Zeit-Diagramm Xt ist ausgestaltet, für einen sensitiven Betrieb, so dass ein Benutzer IBS mit einen Zeigegerät 5 einen Zeitpunkt t auswählt und ein weiteres Ausgabefeld 7 mit einer Codezeile CZk angezeigt bekommt (siehe hierzu auch FIG 3). Die angezeigte Codezeile CZk weist den Programmbefehl Bi auf, welcher zu dem Zeitpunkt t ausgeführt wird, dabei ist das Weg-Zeit-Diagramm Xt als weiteres Grafikelement 4'ausgestaltet mit einer weiteren Verbindung zu der Zuordnungstabelle 10. Die Engineering-Station 70 ist weiterhin ausgestaltet, dass das Ausführungsmittel 72 und der Programmeditor 3 derart miteinander zusammenarbeiten, dass in einem Schrittbetrieb durch eine Handeingabe einzelne Programmbefehle Bi Schritt für Schritt ausgeführt werden, wobei das Grafikelement 4 ausgestaltet ist, zu dem jeweiligen Schritt den zugehörigen Bewegungsabschnitt 2 in dem Polygonzug optisch hervorzuheben.

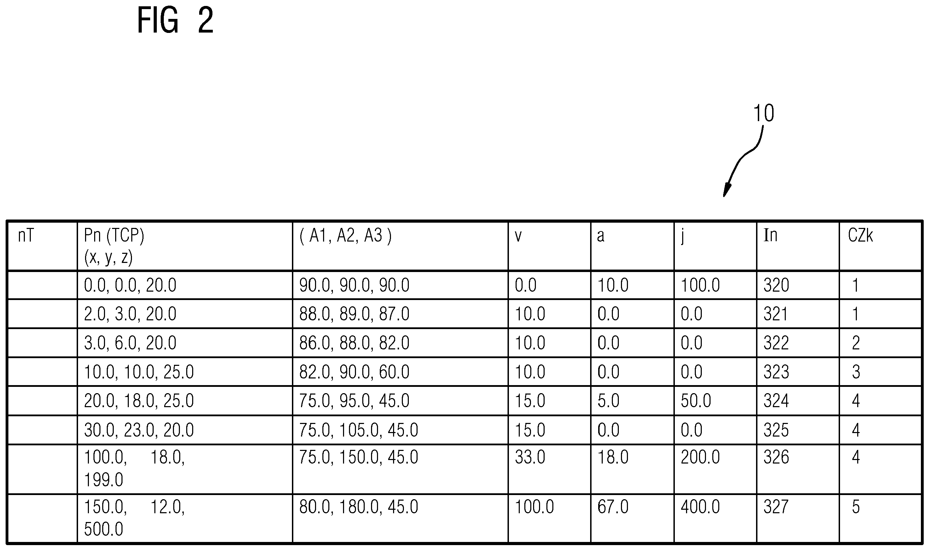

Gemäß FIG 2 ist die bereits mit FIG 1 erwähnte Zuordnungstabelle 10 dargestellt. In einer ersten Spalte der Zuordnungstabelle 10 sind die Abtastzeitpunkte nT aufgelistet. In einer zweiten Spalte der Zuordnungstabelle 10 ist der Positionsvektor Pn bzw. der Werkzeugarbeitspunkt TCP eingetragen. In einer dritten Spalte sind Maschinenkoordinaten A1,A2,A3 dargestellt. In einer vierten Spalte ist die Geschwindigkeit v der Vorrichtung 50 eingetragen. In einer fünften Spalte ist die Beschleunigung a der Vorrichtung 50 zu diesem Zeitpunkt eingetragen. In einer sechsten Spalte ist ein Ruck j eingetragen. In der siebten und letzten Spalte ist letztendlich die zugehörige Programmzeile bzw. der zugehörige Codezeilen-Index In eingetragen. Auf der Basis solch einer Zuordnungstabelle 10 kann man nun die aktuelle Position bzw. den aktuellen Positionsvektor Pn der Vorrichtung 50 derart zurückverfolgen, dass man nun immer weiß zu welcher Programmzeile bzw. Codezeile CZk welcher Positionsvektor Pn gehören muss.

Der Eintrag v für die Geschwindigkeit entspricht der ersten Ableitung nach der Zeit t, der Eintrag a für die Beschleunigung entspricht der zweiten Ableitung nach der Zeit t und der Eintrag j für den Ruck entspricht der dritten Ableitung nach der Zeit t.

Die Aufzeichnung mit der Zuordnungstabelle 10 kann nun in der 3D-Darstellung wieder abgespielt werden, wobei sich entweder nur der Werkzeugarbeitspunkt TCP auf der Bewegungsbahn 1 (Leuchtspur) bewegt oder - falls die notwendigen Maschinenkoordinaten A1,A2,A3 verfügbar sind - auch die Kinematik abgespielt werden kann. Um die Zuordnung des Werkzeugarbeitspunktes TCP auf der Bewegungsbahn 1, welche z.B. als eine Leuchtspur dargestellt wird, zu einem im Weg-Zeit-Diagramms Xt dargestellten Cursor zu visualisieren, erfolgt eine Kopplung über den Aufzeichnungspunkt, nämlich den Abtastzeitpunkt nT. Durch die zusätzlich in der Aufzeichnung enthaltenen Daten der Programmabarbeitung, nämlich den Codezeilen-Index In oder generell der entsprechenden Codezeile CZk oder sogar dem einzelnen Programmbefehl Bi, ist es nun möglich die Bewegungsabschnitte 2 der Bewegungsbahn 1 und die Signale im Weg-Zeit-Diagramms Xt den programmierten Befehlen Bi eindeutig zuzuordnen.

Eine Zuordnung kann dabei visuell unterschiedlich erfolgen:
- Als Marke im Programmeditor 3, der die aktuelle Programmposition markiert, als Text in der Nähe des Werkzeugarbeitspunktes TCP innerhalb der 3D-Darstellung, durch unterschiedliche Einfärbungen der Bereiche auf der Bewegungsbahn 1 (unterschiedlich farbliche Leuchtspuren), durch eine Anzeige der Programmzeile, wenn der Benutzer mit der Maus über die Leuchtspur fährt(hovert) (ähnlich wie ein Tooltipp).
- Alternativ zu der Codezeile CZk oder des Codezeilen-Index In kann in der 3D-Ansicht auch der Programmbefehl BI angezeigt werden, oder eine Kombination von Codezeile CZk, Codezeilen-Index In oder Programmbefehl Bi. Der Programmbefehl Bi kann in seiner Memonik verkürzend dargestellt werden.
- Das Umfeld des Programmbefehls PI (vorangegangener Befehl und folgender Befehl) kann auch dargestellt werden.
- Die Markierung kann Befehlsgranular erfolgen, oder auf Basis von Programmfunktionen (Technologiefunktionen) und dann einen Bereich der Leuchtspur markieren und die entsprechenden Stellen werden im Weg-Zeit-Diagramm xt markiert.

Erfindungsgemäß kann durch die Kombination der 3D-Darstellung, des Weg-Zeit-Diagramms xt und der Programmdarstellung im Programmeditor 3 der Anwender über einen Klick auf einen Bewegungsabschnitt 2 in der 3D-Ansicht zu der entsprechenden Programmposition bzw. Codezeile CZk gelangen. Zusätzlich wird die entsprechende Position im Programmeditor 3 optisch hervorgehoben. Ausgehend von dem Programmeditor 3 und seiner Programmdarstellung kann auch der zu einer Programmposition oder zu einem Codezeilen-Index In gehörende Leuchtspurabschnitt und der zugehörige xt-Abschnitt hervorgehoben werden.

Mit der FIG 3 ist eine Ansicht auf einen Monitor 60 einer Engineering-Station 70 dargestellt. Die Monitoransicht des Monitors 60 zeigt im Prinzip drei Hauptdarstellungsfelder. Zum einen ist die textuelle Darstellung in den Programmeditor 3 dargestellt und zum anderen wird daneben in einer grafischen Darstellung die 3D-Ansicht der Vorrichtung 50 und ein Weg-Zeit-Diagramms Xt von Signalverläufen zur Ansteuerung der Antriebe M1,M2,M3 dargestellt. Der Programmeditor 3 weist das Anwenderprogramm AW auf. Das Anwenderprogramm AW ist in Codezeilen CZk aufgeteilt. In jeder Codezeile CZk befinden sich ein oder mehrere Programmbefehle Bi. Zum genaueren Wiederauffinden der entsprechenden Programmposition sind den Programmbefehlen Bi zusätzlich noch Codezeilenindizes In zugeordnet. Dem ersten Programmbefehl B1 ist demnach der Codezeilen Index I1 zugeordnet und dem letzten Programmbefehl Bi ist demnach der Codezeilen Index In = Ii zugeordnet.

Hat nun ein Benutzer IBS beispielsweise in dem ersten Ausgabeelement 11 mit seinen Zeigegerät 5 (Maus) an einer Stelle D auf die Bewegungsbahn 1 gezeigt, so wird zeitgleich im ersten Ausgabeelement 11 an der angezeigten Stelle ein Ausgabefeld 6 ausgegeben, in der die zugehörige Codezeile CZk angezeigt wird. Quasi parallel zu dieser Anzeige wird in den Programmeditor 3 die entsprechende Codezeile CZk optisch hervorgehoben. Zusätzlich zur weiteren Identifizierung wird der zugehörige Programmbefehl B7 durch eine weitere optische Hervorhebung 42 in der optischen Hervorhebung 41 für die Codezeile CZk noch einmal optisch hervorgehoben.

Auch in dem zweiten Ausgabeelement 12 für die Darstellung des Weg-Zeit-Diagramms Xt wird die entsprechende Codezeile CZk mittels eines weiteren Ausgabefeldes 7 zu dem entsprechenden Zeitpunkt t angezeigt.

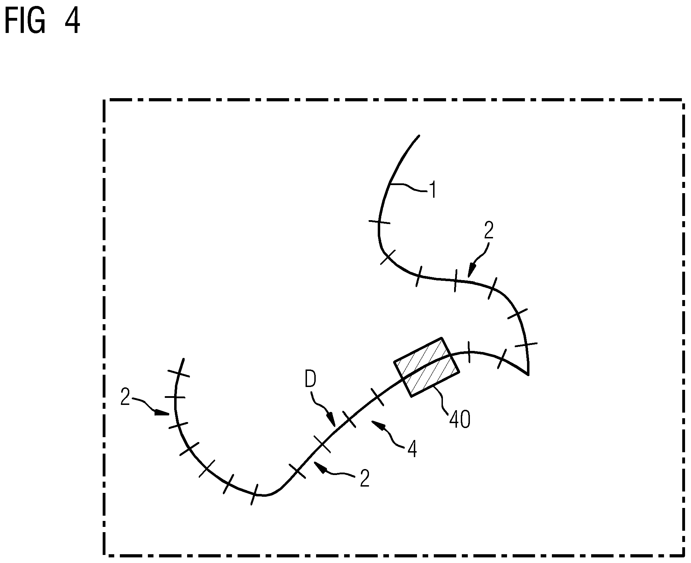

Mit der FIG 4 wird nochmal die Aufteilung der Bewegungsbahn 1 in einzelne Bewegungsabschnitte 2 erläutert. Die von der Vorrichtung 50 durchgeführte Bewegungsbahn 1 startet linksseitig und endet rechtsseitig. Die ganze Bewegungsbahn 1 ist in einzelne Bewegungsabschnitte 2 aufgeteilt. Zeigt nun ein Benutzer IBS mit einer Maus an einer Stelle D auf die Bewegungsbahn 1, so wird das in FIG 3 beschriebene Szenario im Programmeditor 3 dargestellt. Andererseits kann aber auch in der Bewegungsbahn 1 bzw. mittels des Grafikelementes 4, welches mittels der Zuordnungstabelle 10 den Polygonzug durch Anklicken einer Zeile bildet, aus dem Programmeditor 3 eine gewisse Stelle auf der Bewegungsbahn 1 als Leuchtspur angezeigt werden. So ist es z.B. möglich eine Simulation des Anwenderprogramms AW durchzuführen so dass ein Benutzer IBS mittels des ersten Ausgabeelementes 11 die Anlage testen kann ohne, dass ein real existierende Hardware vorhanden ist. Eine entsprechende optische Hervorhebung 40 im Polygonzug würde dann entsprechend des gerade bearbeiteten Programmbefehls Bi auf der Leuchtspur wandern. Dementsprechend ist es auch möglich, wenn das Ausführungsmittel 72 und der Programmeditor 3 derart ausgestaltet sind in einem Schrittbetrieb mittels einer Handeingabe einzelne Programmbefehle Bi Schritt für Schritt auszuführen, das Grafikelement 4 ist dann ausgestaltet, zu dem jeweiligen Schritt den zugehörigen Bewegungsabschnitt 2 in der Bewegungsbahn optisch hervorzuheben, dies kann beispielsweise durch die optische Hervorhebung 40 im Polygonzug geschehen.

## Patentansprüche

1. Verfahren zur Diagnose eines Anwenderprogramms (AW) für eine Steuerung von Bewegungs- und Positionieraufgaben einer Mehrzahl an Antrieben (M), welche zum Ausführen einer Bewegungsbahn (1) einer Vorrichtung (50) betrieben werden, wobei das Anwenderprogramm (AW) einzelne Bewegungsabschnitte (2) der Vorrichtung (50) durch das Ausführen von Programmbefehlen (Bi) auslöst, wobei in einem textbasierten Programmeditor (3) die Programmbefehle (Bi) als Codezeilen (CZk) implementiert werden, wobei das Anwenderprogramm (AW) ausgeführt wird und dabei zeitdiskret zu Abtastzeitpunkten (nT) ein Positionsvektor (Pn) der Bewegungsbahn (1) aufgezeichnet wird, wobei zur Darstellung der Bewegungsbahn (1) ein Grafikelement (4) in Form eines Polygonzugs für die Bewegungsabschnitte (2) erzeugt wird und der Polygonzug zur Darstellung der Bewegungsbahn (1) in das erste Ausgabeelement (11) eingeblendet wird, **dadurch gekennzeichnet, dass** die Vorrichtung (50) mit ihrer Bewegungsbahn (1) als eine dreidimensionale Ansicht (3D) in einem ersten Ausgabeelement (11) dargestellt wird,
wobei ein Codezeilen-Index (In) zu der zu den jeweiligen Abtastzeitpunkten (nT) ausgeführten Codezeile (CZk) aufgezeichnet wird, wobei in einer Zuordnungstabelle (10) zu den jeweiligen Abtastzeitpunkten (nT) der Positionsvektor (Pn) und der Codezeilen-Index (In) als Wertepaar eingetragen werden, dabei wird das Grafikelement (4) mit der Zuordnungstabelle (10) verknüpft, wobei das Grafikelement (4) sensitiv betrieben wird, so dass ein Benutzer (IBS) mit einem Zeigegerät (5) eine Stelle (D) auf dem Polygonzug auswählt und ein Ausgabefeld (6) mit einer Codezeile (CZk) angezeigt bekommt, wobei die angezeigte Codezeile (CZk) den Programmbefehl (Bi) aufweist, welcher durch die Ausführung für das Erreichen der ausgewählten Stelle (D) innerhalb des Bewegungsabschnittes (2) der Vorrichtung bzw. des Positionsvektors (Pn) verantwortlich ist.

2. Verfahren nach Anspruch 1, wobei als Positionsvektor (Pn) ein Werkzeugarbeitspunkt der Vorrichtung (50) mit einer x-Koordinate (x) und einer y-Koordinate (y) für eine zweidimensionale Kinematik oder eine x-Koordinate (x), eine y-Koordinate (y) einer z-Koordinate (z) für eine dreidimensionale Kinematik verwendet wird.

3. Verfahren nach Anspruch 1 oder 2, wobei zusätzlich ein Weg-Zeit-Diagramm (Xt) der Vorrichtung (50) in einem zweiten Ausgabeelement (12) dargestellt wird, das Weg-Zeit-Diagramm (Xt) wird dabei sensitiv betrieben, so dass ein Benutzer (IBS) mit einem Zeigegerät (5) einen Zeitpunkt (t) auswählt und ein weiteres Ausgabefeld (7) mit einer Codezeile (CZk) angezeigt bekommt, wobei die angezeigte Codezeile (CZk) den Programmbefehl (Bi) aufweist, welcher durch die Ausführung zu diesem Zeitpunkt (t) verantwortlich ist.

4. Verfahren nach einem der Ansprüche 1 bis 3, wobei der Programmeditor (3) in einem Schrittbetrieb auf Basis der Aufzeichnungen in der Zuordnungstabelle (10) betrieben wird und ein einzelner Programmbefehl (Bi) durch eine Handeingabe ausgeführt wird und der zu diesem Programmbefehl (Bi) zugehörige Bewegungsabschnitt (2) wird in dem Polygonzug optisch hervorgehoben.

5. Verfahren nach einem der Ansprüche 1 bis 4, wobei der Programmeditor (3) und das erste Ausgabeelement (11) für die dreidimensionale Ansicht (3D) derart miteinander wechselwirken, dass durch eine Auswahl einer Stelle (D) auf dem Polygonzug durch den Benutzer (IBS) mit einem Zeigegerät (5) der Programmeditor (3) in den Fokus geschaltet wird und die Codezeile (CZk) optisch hervorgehoben wird, welche dem Bewegungsabschnitt (2) der ausgewählten Stelle entspricht, wobei der entsprechende Programmbefehl (Bi) in der optisch hervorgehobenen Codezeile (CZk) nochmal anders optisch hervorgehoben wird.

6. Verfahren nach einem der Ansprüche 1 bis 5, wobei eine Simulation des Anwenderprogramms (AW) auf Basis der Aufzeichnung der in der Zuordnungstabelle (10) durchgeführt wird und ein Benutzer (IBS) die Bewegungsbahn (1) mit der dreidimensionalen Ansicht (3D) in dem ersten Ausgabeelement (11) testet ohne, dass eine realexistierende Hardware vorhanden ist.

7. Engineering-Station (70) zur Diagnose eines Anwenderprogramms (AW) für eine Steuerung von Bewegungs- und Positionieraufgaben einer Mehrzahl an Antrieben (M), welche zum Ausführen einer Bewegungsbahn (1) einer Vorrichtung (50) betrieben werden, umfassend
einen textbasierten Programmeditor (3),
ein erstes Ausgabeelement (11) ausgestaltet die Vorrichtung (50) und ihre Bewegungsbahn (1) als eine dreidimensionale Ansicht (3D) darzustellen, wobei
das Anwenderprogramm (AW) Codezeilen (CZk) mit Programmbefehlen (Bi) aufweist, wobei die Programmbefehle (Bi) ausgestaltet sind über eine Automatisierungskomponente (71) Bewegungsabschnitte (2) der Vorrichtung (50) auszulösen, weiterhin aufweisend ein Ausführungsmittel (72), welches ausgestaltet ist das Anwenderprogramm (AW) auszuführen und dabei zeitdiskret zu Abtastzeitpunkten (nT) einen Positionsvektor (Pn) der Bewegungsbahn (1) aufzuzeichnen,
das erste Ausgabeelement (11) ist weiterhin ausgestaltet die Bewegungsbahn (1) als ein Grafikelement (4) in Form eines Polygonzugs für die Bewegungsabschnitte (2) darzustellen,
**dadurch gekennzeichnet, dass** das Aufzeichnungsmittel weiterhin ausgestaltet ist
einen Codezeilen-Index (In) zu der bei den jeweiligen Abtastzeitpunkten (nT) ausgeführten Codezeile (CZk) aufzuzeichnen und zusammen mit dem jeweiligen Positionsvektor (Pn) in einer Zuordnungstabelle (10) als Wertepaar abzulegen,
dabei ist das Grafikelement (4) derart sensitiv ausgestaltet, das ein Benutzer (IBS) mit einem Zeigegerät (5) eine Stelle (D) auf dem Polygonzug auswählt und ein Ausgabefeld (6) mit einer Codezeile (CZk) anzeigt, das Grafikelement (4) verfügt über eine Verbindung zu der Zuordnungstabelle (10) und ist weiterhin dazu ausgestaltet diejenige Codezeile (CZk) anzuzeigen, welche den Programmbefehl (Bi) aufweist, welcher für das Erreichen der Vorrichtung des der ausgewählten Stelle (D) zugehörigen Bewegungsabschnittes (2) verantwortlich ist.

8. Engineering-Station (70) nach Anspruch 7, wobei die Zuordnungstabelle (10) als Positionsvektor (Pn) ein Werkzeugarbeitspunkt (TCP) der Vorrichtung (50) mit einer x-Koordinate (x), einer y-Koordinate und einer Z-Koordinate (z) aufweist.

9. Engineering-Station (70) nach Anspruch 7 oder 8, weiterhin aufweisend ein zweites Ausgabeelement (12) zur Darstellung eines Weg-Zeit-Diagramms (Xt) der Vorrichtung (50), das Weg-Zeit-Diagramm (Xt) ist ausgestaltet für einen sensitiven Betrieb, so dass ein Benutzer (IBS) mit einem Zeigegerät (5) einen Zeitpunkt (t) auswählt und ein weiteres Ausgabefeld (7) mit einer Codezeile (CZk) angezeigt bekommt, wobei die angezeigte Codezeile (CZk) den Programmbefehl (Bi) aufweist, welcher zu diesem Zeitpunkt (t) ausgeführt wird, dabei hat das Weg-Zeit-Diagramm (Xt) als weiteres Grafikelement (4') eine weitere Verbindung zu der Zuordnungstabelle (10).

10. Engineering-Station (70) nach einem der Ansprüche 7 bis 9, wobei das eine Ausführungsmittel (72) und der Programmeditor (3) ausgestaltet sind in einem Schrittbetrieb durch eine Handeingabe einzelne Programmbefehle (Bi) Schritt für Schritt auszuführen, wobei das Grafikelement (4) ausgestaltet ist zu dem jeweiligen Schritt den zugehörigen Bewegungsabschnitt (2) in dem Polygonzug optisch hervorzuheben.

11. Engineering-Station (70) nach einem der Ansprüche 7 bis 10, wobei der Programmeditor (3) und das erste Ausgabeelement (11) für die die dreidimensionale Ansicht (3D) ausgestaltet sind, das durch eine Auswahl einer Stelle (D) auf dem Polygonzug durch den Benutzer (IBS) mit einem Zeigegerät (5) der Programmeditor (3) in den Focus geschaltet wird und die Codezeile (CZk), welche dem Bewegungsabschnitt (2) der ausgewählten Stelle entspricht in dem Programmeditor (3) optisch hervorgehoben wird, weiterhin ist der Programmeditor (3) ausgestaltet den entsprechenden Programmbefehl (Bi) in der optisch hervorgehobenen Codezeile (CZk) nochmal anders optisch hervorzuheben.

12. Engineering-Station (70) nach einem der Ansprüche 7 bis 11, aufweisend ein Simulationsmittel (74) ausgestaltet eine Simulation des Anwenderprogramms (AW) durchzuführen, wobei das erste Ausgabeelement (11) ausgestaltet ist einem Benutzer (IBS) es zu ermöglichen mit der dreidimensionalen Ansicht (3D) die Bewegungsbahn (1) zu testen, ohne, das eine realexistierende Hardware vorhanden ist.

## Claims

1. Method for diagnosing a user program (AW) for controlling movement and positioning tasks of a plurality of drives (M), which are operated to execute a movement path (1) of an apparatus (50), wherein the user program (AW) triggers individual movement sections (2) of the apparatus (50) by executing program instructions (Bi), wherein the program instructions (Bi) are implemented as lines of code (CZk) in a text-based program editor (3), wherein the user program (AW) is executed and herein a position vector (Pn) of the movement path (1) is recorded in a time-discrete manner at sampling time points (nT), wherein a graphic element (4) in the form of a polygonal chain is generated for the movement sections (2) in order to depict the movement path (1), and the polygonal chain is superimposed on the first output element (11) in order to depict the movement path (1),
**characterised in that**
the apparatus (50) with its movement path (1) is depicted as a three-dimensional view (3D) in a first output element (11), wherein a code line index (In) of the line of code (CZk) executed at the respective sampling time point (nT) is recorded, wherein the position vector (Pn) and the code line index (In) are entered as a pair of values in an assignment table (10) at the respective sampling time points (nT), herein the graphic element (4) is linked to the assignment table (10), wherein the graphic element (4) is operated sensitively so that a user (IBS) selects a location (D) with a pointer device (5) on the polygonal chain and obtains a display of an output field (6) with a line of code (CZk), wherein the displayed line of code (CZk) has the program instruction (Bi) which is responsible through the execution for reaching the selected location (D) within the movement section (2) of the apparatus or the position vector (Pn).

2. Method according to claim 1, wherein a tool centre point of the apparatus (50) with an x-coordinate (x) and a y-coordinate (y) for two-dimensional kinematics or an x-coordinate (x), a y-coordinate (y) a z-coordinate (z) for three-dimensional kinematics is used as a position vector (Pn).

3. Method according to claim 1 or 2, wherein, in addition, a path-time diagram (Xt) of the apparatus (50) is depicted in a second output element (12), herein, the path-time diagram (Xt) is operated sensitively so that a user (IBS) selects a time point (t) with a pointer device (5) and obtains a display of a further output field (7) with a line of code (CZk), wherein the displayed line of code (CZk) has the program instruction (Bi), which is responsible through the execution at this time point (t).

4. Method according to one of claims 1 to 3, wherein the program editor (3) is operated in a step mode on the basis of the recordings in the assignment table (10) and a single program instruction (Bi) is executed by manual input and the movement section (2) associated with this program instruction (Bi) is visually highlighted in the polygonal chain.

5. Method according to one of claims 1 to 4, wherein the program editor (3) and the first output element (11) for the three-dimensional view (3D) interact with one another in such a way that the selection of a location (D) by the user (IBS) on the polygonal chain with a pointer device (5) causes the program editor (3) to be switched into focus and the line of code (CZk), corresponding to the movement section (2) of the selected location to be visually highlighted, wherein the corresponding program instruction (Bi) in the visually highlighted line of code (CZk) is visually highlighted again in a different way.

6. Method according to one of claims 1 to 5, wherein a simulation of the user program (AW) is performed on the basis of the recording in the assignment table (10) and a user (IBS) tests the movement path (1) with the three-dimensional view (3D) in the first output element (11) without any hardware that actually exists being present.

7. Engineering-Station (70) for diagnosing a user program (AW) for controlling movement and positioning tasks of a plurality of drives (M), which are operated to execute a movement path (1) of an apparatus (50), comprising
a text-based program editor (3),
a first output element (11) embodied to depict the apparatus (50) and its movement path (1) as a three-dimensional view (3D), wherein
the user program (AW) has lines of code (CZk) with program instructions (Bi), wherein the program instructions (Bi) are embodied to trigger movement sections (2) of the apparatus (50) via an automation component (71), furthermore having an execution means (72), which is embodied to execute the user program (AW) and, herein, to record in a time-discrete manner at sampling time points (nT) a position vector (Pn) of the movement path (1),
the first output element (11) is furthermore embodied to depict the movement path (1) as a graphic element (4) in the form of a polygonal chain for the movement sections (2),
c**haracterised in** that the recording means is further embodied
to record a code line index (In) of the line of code (CZk) executed at the respective sampling time point (nT) and to file it together with the respective position vector (Pn) in an assignment table (10) as a pair of values,
herein, the graphic element (4) is sensitively embodied in such a way that a user (IBS) selects a location (D) on the polygonal chain with a pointer device (5) and displays an output field (6) with a line of code (CZk), the graphic element (4) has a link to the assignment table (10) and is furthermore embodied to display the line of code (CZk) having the program instruction (Bi) responsible for reaching the apparatus of the movement section (2) associated with the selected location (D).

8. Engineering station (70) according to claim 7, wherein the assignment table (10) has a tool centre point (TCP) of the apparatus (50) with an x-coordinate (x), a y-coordinate and a Z-coordinate (z) as a position vector (Pn).

9. Engineering station (70) according to claim 7 or 8, furthermore having a second output element (12) for depicting a path-time diagram (Xt) of the apparatus (50), the path-time diagram (Xt) is embodied for sensitive operation so that a user (IBS) selects a time point (t) with a pointer device (5) and obtains a display of a further output field (7) with a line of code (CZk), wherein the displayed line of code (CZk) has the program instruction (Bi) executed at this time point (t), herein, the path-time diagram (Xt) has a further link to the assignment table (10) as a further graphic element (4').

10. Engineering station (70) according to one of claims 7 to 9, wherein the one execution means (72) and the program editor (3) are embodied to execute individual program instructions (Bi) step by step in a step mode by manual input, wherein the graphic element (4) is embodied to visually highlight the movement section (2) associated with the respective step in the polygonal chain.

11. Engineering station (70) according to one of claims 7 to 10, wherein, for the three-dimensional view (3D), the program editor (3) and the first output element (11) are embodied such that a selection of a location (D) on the polygonal chain by the user (IBS) with a pointer device (5) causes the program editor (3) to be switched into focus and the line of code (CZk) corresponding to the movement section (2) of the selected location to be visually highlighted in the program editor (3), furthermore, the program editor (3) is embodied to visually highlight the corresponding program instruction (Bi) in the visually highlighted line of code (CZk) again in a different way.

12. Engineering station (70) according to one of claims 7 to 11 having a simulation means (74) embodied to perform a simulation of the user program (AW), wherein the first output element (11) is embodied to enable a user (IBS) to test the movement path (1) with the three-dimensional view (3D), without any hardware that actually exists being present.

## Revendications

1. Procédé de diagnostic d'un programme (AW) d'utilisateur pour une commande de tâches de déplacement et de mise en position d'une pluralité d'entraînements (M), que l'on fait fonctionner pour l'exécution d'un chemin (1) de déplacement d'un dispositif (50), dans lequel le programme (AW) d'utilisateur déclenche divers segments (2) de déplacement du dispositif (50) par l'exécution d'instructions (Bi) de programme, dans lequel, dans un éditeur (3) de programme fondé sur du texte, les instructions (Bi) de programme sont mises en œuvre sous la forme de lignes (CZk) de code, dans lequel on exécute le programme (AW) d'utilisateur et on enregistre, à cet égard, d'une manière discrète dans le temps, en des instants (nT) d'échantillonnage, un vecteur (Pn) de position du chemin (1) de déplacement, dans lequel on produit, pour la représentation du chemin (1) de déplacement, un élément (4) graphique sous la forme d'un tracé polygonal des segments (2) de déplacement et on surimpressionne le tracé polygonal pour la représentation du chemin (1) de déplacement dans le premier élément (11) d'édition, **caractérisé en ce que**
l'on représente le dispositif (50) avec son chemin (1) de déplacement sous la forme d'une vue (3D) en trois dimensions dans un premier élément (11) d'édition,
dans lequel on enregistre un indice (In) de ligne de code par rapport aux lignes (CZk) de code exécutés aux instants (nT) d'échantillonnage respectifs, dans lequel on introduit, comme paire de valeurs, dans une table (10) d'association aux instants (nT) d'échantillonnage respectifs, le vecteur (Pn) de position et l'indice (In) de ligne de code en combinant ainsi l'élément (4) graphique à la table (10) d'association, dans lequel on fait fonctionner de manière sensitive l'élément (4) graphique, de manière à ce qu'un utilisateur (IBS) sélectionne par un appareil (5) à aiguille une position (D) sur le tracé polygonal, et qu'un champ (6) d'édition en vienne à être indiqué par une ligne (CZk) de code, dans lequel la ligne (CZk) de code indiquée a l'instruction (Bi) de programme, qui, par l'exécution, est responsable de l'atteinte de la position (D) sélectionnée dans le segment (2) de déplacement du dispositif ou dans le vecteur (Pn) de position.

2. Procédé suivant la revendication 1, dans lequel on utilise, comme vecteur (Pn) de position, un point de travail d'outil du dispositif (50) avec une coordonnée x (x) et une coordonnée y (y) pour une cinématique en deux dimensions ou une coordonnée x (x) une coordonnée y (y) et une coordonnée z (z) pour une cinématique en trois dimensions.

3. Procédé suivant la revendication 1 ou 2, dans lequel on représente en outre un diagramme (Xt) trajet-temps du dispositif (50) dans un deuxième élément (12) d'édition, on fait fonctionner de manière sensitive le diagramme (Xt) trajet-temps, de manière à ce qu'un utilisateur (IBS) choisisse par un appareil (5) à aiguille un instant (t) et qu'un autre champ (7) d'édition en vienne à être indiqué par une ligne (CZk) de code, dans lequel la ligne (CZk) de code indiquée a l'instruction (Bi) de programme, qui est responsable par l'exécution à cet instant (t).

4. Procédé suivant l'une des revendications 1 à 3, dans lequel on fait fonctionner l'éditeur (3) de programme dans un fonctionnement pas à pas sur la base des enregistrements dans la table (10) d'association et on exécute une instruction (Bi) de programme individuel par une entrée manuelle et on provoque optiquement dans le tracé polygonal le segment (2) de déplacement associé à cette instruction (Bi) de programme.

5. Procédé suivant l'une des revendications 1 à 4, dans lequel l'éditeur (3) de programme et le premier élément (11) d'édition interagissent entre eux pour la vue (3D) en trois dimensions, de manière à ce que par une sélection d'un emplacement (D) sur le tracé polygonal par l'utilisateur (IBS) par un appareil (5) à aiguille, on branche l'éditeur (3) de programme au foyer et on fait ressortir optiquement la ligne (CZk) de code, qui correspond au segment (2) de déplacement de la position sélectionnée, dans lequel on fait ressortir encore optiquement d'une autre façon l'instruction (Bi) de programme correspondante dans la ligne (CZk) de code que l'on a fait ressortir optiquement.

6. Procédé suivant l'une des revendications 1 à 5, dans lequel on effectue une simulation du programme (AW) d'utilisateur sur la base de l'enregistrement dans la table (10) d'association et un utilisateur (IBS) teste le chemin (1) de déplacement par la vue (3D) en trois dimensions dans le premier élément (11) d'édition sans avoir un matériel existant réellement.

7. Station (70) d'ingénierie de diagnostic d'un programme (AW) d'utilisateur pour une commande de tâches de déplacement et de mise en position d'une pluralité d'entraînements (M), que l'on fait fonctionner pour l'exécution d'un chemin (1) de déplacement d'un dispositif (50), comprenant
un éditeur (3) de programme fondé sur du texte,
un premier élément (11) d'édition conformé pour représenter le dispositif (50) et son chemin (1) de déplacement sous la forme d'une vue (3D) en trois dimensions, dans laquelle le programme (AW) d'utilisateur a des lignes (CZk) de code avec des instructions (Bi) de programme, dans laquelle les instructions (Bi) de programme sont conformées pour déclencher par un composant (71) d'automatisation des segments (2) de déplacement du dispositif (50), comportant en outre un moyen (72) d'exécution, qui est conformé pour exécuter le programme (AW) d'utilisateur et enregistrer ainsi d'une manière discrète dans le temps à des instants (nT) d'échantillonnage, un vecteur (Pn) de position du chemin (1) de déplacement,
le premier élément (11) d'édition est conformé en outre pour représenter le chemin (1) de déplacement sous la forme d'un élément (4) graphique sous la forme d'un tracé polygonal pour les segments (2) de déplacement,
**caractérisée en ce que** le moyen d'enregistrement est conformé en outre pour enregistrer un indice (In) de lignes de code correspondant aux lignes (CZk) de code exécutées aux instants (nT) d'échantillonnage respectifs et pour le mettre comme paire de valeur ensemble avec le vecteur (Pn) de position respective dans une table (10) d'association,
à cet égard l'élément (4) graphique est conformé de manière sensitive, de manière à ce qu'un utilisateur (IBS) sélectionne par un appareil (5) à aiguille, une position (D) sur le tracé polygonal et indique un champ (6) d'édition par une ligne (CZk) de code, l'élément (4) graphique dispose d'une liaison à la table (10) d'association et est conformé en outre pour indiquer la ligne (CZk) de code, qui a l'instruction (Bi) de programme, qui est responsable pour que le dispositif atteigne le segment (2) de déplacement associé à la position (D) sélectionnée.

8. Station (70) d'ingénierie suivant la revendication 7, dans laquelle la table (10) d'association a, comme vecteur (Pn) de position, un point (TCP) de travail de l'outil du dispositif (50) avec une coordonnée x (x), une coordonnée y et une coordonnée Z (z).

9. Station (70) d'ingénierie suivant la revendication 7 ou 8, comportant en outre un deuxième élément (12) d'édition pour la représentation d'un diagramme (Xt) trajet-temps du dispositif (50), le diagramme (Xt) trajet-temps étant conformé pour un fonctionnement sensitif, de manière à ce qu'un utilisateur (IBS) choisisse un instant (t) par un appareil (5) à aiguille et qu'un autre champ (7) d'édition en vienne à être indiqué par une ligne (CZk) de code, dans laquelle la ligne (CZk) de code indiquée a l'instruction (Bi) de programme, qui est exécutée à cet instant (t), à cet égard le diagramme (Xt) trajet-temps ayant comme autre élément (4') graphique, une autre liaison à la table (10) d'association.

10. Station (70) d'ingénierie suivant l'une des revendications 7 à 9, dans laquelle ledit un moyen (72) d'exécution et l'éditeur (3) de programme sont conformés pour exécuter pas à pas dans un fonctionnement pas à pas par une entrée manuelle de diverses instructions (Bi) de programme, dans laquelle l'élément (4) graphique est conformé pour faire ressortir optiquement dans le tracé polygonal au stade respectif le segment (2) de déplacement associé.

11. Station (70) d'ingénierie suivant l'une des revendications 7 à 10, dans laquelle l'éditeur (3) de programme et le premier élément (11) d'édition sont conformés pour la vue (3D) en trois dimensions, de manière à ce que, par une sélection d'une position (D) sur le tracé polygonal par l'utilisateur (IBS) par un appareil (5) à aiguille, l'éditeur (3) de programme soit mis au foyer et de manière à faire ressortir, optiquement dans l'éditeur (3) de programme, la ligne (CZk) de code, qui correspond au segment (2) de déplacement en la position sélectionnée, l'éditeur (3) de programme étant conformé en outre pour faire ressortir conformément à l'instruction (Bi) de programme, la ligne (CZk) de code que l'on a fait ressortir optiquement encore une fois d'une autre façon optiquement.

12. Station (70) d'ingénierie suivant l'une des revendications 7 à 11, comportant un moyen (74) de simulation conformé pour exécuter une simulation du programme (AW) d'utilisateur, dans laquelle le premier élément (11) d'édition est conformé pour rendre possible à un utilisateur (IBS) de tester par la vue (3D) en trois dimensions le chemin (1) de déplacement sans avoir un matériel existant réellement.
